(19)

**Europäisches Patentamt**
**European Patent Office**
**Office européen des brevets**

(11) **EP 3 021 012 A1**

(12) **EUROPÄISCHE PATENTANMELDUNG**

(43) Veröffentlichungstag:
**18.05.2016 Patentblatt 2016/20**

(21) Anmeldenummer: **15190951.2**

(22) Anmeldetag: **22.10.2015**

(51) Int Cl.:
**F16H 61/4096** (2010.01) **B60K 6/12** (2006.01)
**F15B 19/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **07.11.2014 DE 102014222766**

(71) Anmelder: **ROBERT BOSCH GMBH**
**70442 Stuttgart (DE)**

(72) Erfinder: **Sriram, Sriganesh**
**Atlanta, GA Georgia 30308 (US)**

(54) **VERFAHREN ZUR STEUERUNG UND REGELUNG EINES ANTRIEBSSTRANGES**

(57) Verfahren zur Steuerung und/oder Regelung eines Antriebsstranges (1) für ein Kraftfahrzeug mit den Schritten: Einleiten einer Hydraulikflüssigkeit in wenigstens einen Druckspeicher (27), so dass ein Gasvolumen in dem Druckspeicher (27) reduziert wird und die Ist-Temperatur und der Ist-Druck des Gases erhöht wird und/oder Ausleiten einer Hydraulikflüssigkeit aus dem wenigstens einen Druckspeicher (27), so dass ein Gasvolumen in dem Druckspeicher (27) erhöht wird und die Ist-Temperatur und der Ist-Druck des Gases reduziert wird, Erfassen eines Mess-Druckes des Gases in dem wenigstens einen Druckspeicher (27) mit wenigstens einem Drucksensor mit einer ersten zeitlichen Verzögerung zu einem in Abhängigkeit von der Zeit variablen Ist-Druck des Gases, Erfassen einer Mess-Temperatur des Gases in dem wenigstens einen Druckspeicher (27) mit wenigstens einem Temperatursensor mit einer zweiten zeitlichen Verzögerung zu einem in Abhängigkeit von der Zeit variablen Ist-Temperatur des Gases und die zweite zeitliche Verzögerung größer ist als die erste zeitliche Verzögerung, wobei zu der von dem wenigstens einen Temperatursensor erfassten Mess-Temperatur eine Modellberechnung ausgeführt wird und mit der Modellberechnung in Abhängigkeit von der Mess-Temperatur des Gases eine Modell-Temperatur bestimmt wird und die zeitliche Verzögerung zwischen der Modell-Temperatur und der Ist-Temperatur des Gases kleiner ist als die zeitliche Verzögerung zwischen der Mess-Temperatur und der Ist-Temperatur des Gases, wobei wenigstens ein Prüfparameter für eine Leckage, Leckagemenge, an Gas und/oder Hydraulikflüssigkeit in dem wenigstens einen Druckspeicher berechnet wird und mit wenigstens einem zulässigen Prüfparameterbereich verglichen wird und bei einem Wert des wenigstens einen Prüfparameters außerhalb des wenigstens einen zulässigen Prüfparameterbereiches wenigstens eine Schadensmaßnahme eingeleitet wird.

Fig. 1

EP 3 021 012 A1

**Beschreibung**

Die vorliegende Erfindung betrifft ein Verfahren zur Steuerung und/oder Regelung eines Antriebsstranges gemäß dem Oberbegriff des Anspruches 1 und einen Antriebsstrang gemäß dem Oberbegriff des Anspruches 13.

Stand der Technik

Kraftfahrzeuge mit einem Verbrennungsmotor weisen einen Antriebsstrang zur Kraftübertragung von dem Verbrennungsmotor auf wenigstens ein Antriebsrad auf. Dabei sind im Allgemeinen an dem Kraftfahrzeug zwei Antriebsräder mittels eines Differentialgetriebes angetrieben. Der Verbrennungsmotor stellt mit einer Motorwelle mechanische Energie zur Verfügung und mittels eines Leistungsverzweigungsgetriebes kann diese mechanische Energie von der Motorwelle auf eine erste und zweite Abtriebswelle an dem Leistungsverzweigungsgetriebe aufgeteilt werden. Dabei treibt die erste Abtriebswelle einen mechanischen Antriebsteilstrang des Antriebsstranges an, bei welchem die mechanische Energie ausschließlich mechanisch auf das wenigstens eine Antriebsrad bzw. das Differentialgetriebe übertragen wird. Die zweite Antriebswelle treibt einen hydraulischen Antriebsteilstrang an und in den hydraulischen Antriebsteilstrang ist ein hydraulisches Getriebe integriert bzw. eingebaut, so dass an dem hydraulischen Antriebsteilstrang die Übertragung der mechanischen Energie auch hydraulisch ausgeführt wird. Zum Betrieb des hydraulischen Getriebes ist eine Pumpe erforderlich, welche von der zweiten Abtriebswelle angetrieben ist, sowie ein hydraulischer Motor, welcher mit einer Hydraulikflüssigkeit von der Pumpe angetrieben ist. Der hydraulische Motor treibt seinerseits mit einer Antriebswelle an dem hydraulischen Motor bzw. einer Hydraulikgetriebantriebswelle das Differentialgetriebe bzw. das wenigstens eine Antriebsrad an. Ferner weist der Antriebsstrang einen Druckspeicher zur Druckspeicherung von hydraulischer Energie auf. Mit der von der zweiten Abtriebswelle des Leistungsverzweigungsgetriebes angetriebene Pumpe kann die Hydraulikflüssigkeit nicht nur dem hydraulischen Motor, sondern auch einem Druckspeicher zugeführt werden zur Speicherung von hydraulischer Energie. Diese in dem Druckspeicher gespeicherte hydraulische Energie kann später durch Leiten der Hydraulikflüssigkeit von dem Druckspeicher zu dem hydraulischen Motor zum Antrieb des wenigstens einen Antriebsrades bzw. des Differentialgetriebes genutzt werden. In einem Rekuperationsbetrieb kann kinetische Energie des Kraftfahrzeuges in dem Druckspeicher als hydraulische Energie gespeichert werden.

Dabei kann mit einem Drucksensor der Druck des Gases in dem Druckspeicher und mit einem Temperatursensor die Temperatur des Gases erfasst werden und hieraus das Volumen des Gases berechnet werden. Beim Ein- oder Ausleiten von Hydraulikflüssigkeit in oder aus dem Druckspeicher verändert sich in Abhängigkeit von der Zeit der Ist-Druck und die Ist-Temperatur des Gases. Der Drucksensor erfasst als Mess-Druck den Ist-Druck mit einer ersten zeitlichen Verzögerung von ungefähr 0,01 s und der Temperatursensor erfasst als Mess-Temperatur die Ist-Temperatur mit einer zweiten zeitlichen Verzögerung von ungefähr 2 bis 3 s. Die zweite zeitliche Verzögerung des Temperatursensors ist somit wesentlich größer als die erste zeitliche Verzögerung des Drucksensors. Zur Berechnung des Volumens des Gases mit der thermischen Zustandsgleichung idealer oder realer Gase ist eine möglichst genaue Kenntnis des Druckes und der Temperatur zur gleichen Zeit erforderlich, um das Volumen des Gases möglichst genau berechnen zu können. Aufgrund der großen zweiten zeitlichen Verzögerung der von dem Temperatursensor erfassten Mess-Temperatur kann somit das Volumen des Gases nur mit einer geringen bzw. unzureichenden Genauigkeit berechnet werden, so dass keine ausreichend exakten Berechnungen möglich sind. Ein Antriebsstrang weist im Allgemeinen als Druckspeicher einen Hoch- und Niederdruckspeicher jeweils mit einem Hydraulikflüssigkeitsraum und einem Gasraum auf. Dabei kann an dem Hoch- und/oder Niederdruckspeicher eine Leckage oder eine Undichtigkeit auftreten mit der Folge eines Verlustes an Gas und/oder Hydraulikflüssigkeit. Bei größeren Verlusten an Gas und/oder Hydraulikflüssigkeit ist die Funktionsfähigkeit des hydraulischen Antriebsteilstranges eingeschränkt oder ausgeschlossen. Aus diesem Grund ist bei einer nicht exakten Berechnung der Menge der Verluste an Gas und/oder Hydraulikflüssigkeit das Erfassen der Leckage nur unzureichend möglich.

Die DE 27 33 870 C2 zeigt eine Steuereinrichtung für eine Schrägenscheibenaxialkolbenpumpe, bei der an beiden Seiten der Wiege zur Verschwenkung der Schrägscheibe je ein hydraulisch beaufschlagter Schwenkflügel am Motor angreift, wobei beide Motoren mittels eines um die Schwenkachse der Wiege verschwenkbar angeordneten plattenförmigen Steuerventilschiebers steuerbar sind und zur Einstellung der Fördermenge der Pumpe dienen.

Die DE 195 42 427 A1 zeigt ein hydrostatisches Antriebssystem für ein hydrostatisch betriebenes Fahrzeug.

Aus der DE 10 2013 215 862 A1 ein Verfahren zur Steuerung und/oder Regelung eines Antriebsstranges bekannt. Es werden ein Mess-Druck und eine Mess-Temperatur eines Gases in einem Druckspeicher erfasst und eine Modell-Temperatur des Gases berechnet und hieraus der Ladezustand des Druckspeichers bestimmt.

Offenbarung der Erfindung

Vorteile der Erfindung

Erfindungsgemäßes Verfahren zur Steuerung und/oder Regelung eines Antriebsstranges für ein Kraftfahrzeug mit den Schritten: Einleiten einer Hydraulikflüssigkeit in wenigstens einen Druckspeicher, so dass ein Gasvolumen in dem Druckspeicher reduziert wird und die Ist-Temperatur und der Ist-Druck des Gases erhöht wird und/oder Ausleiten einer Hydraulikflüssigkeit aus dem wenigstens einen Druckspeicher, so dass ein Gasvolumen in dem Druckspeicher erhöht wird und die Ist-Temperatur und der Ist-Druck des Gases reduziert wird, Erfassen eines Mess-Druckes des Gases in dem wenigstens einen Druckspeicher mit wenigstens einem Drucksensor mit einer ersten zeitlichen Verzögerung zu einem in Abhängigkeit von der Zeit variablen Ist-Druck des Gases, Erfassen einer Mess-Temperatur des Gases in dem wenigstens einen Druckspeicher mit wenigstens einem Temperatursensor mit einer zweiten zeitlichen Verzögerung zu einem in Abhängigkeit von der Zeit variablen Ist-Temperatur des Gases und die zweite zeitliche Verzögerung größer ist als die erste zeitliche Verzögerung, wobei zu der von dem wenigstens einen Temperatursensor erfassten Mess-Temperatur eine Modellberechnung ausgeführt wird und mit der Modellberechnung in Abhängigkeit von der Mess-Temperatur des Gases eine Modell-Temperatur bestimmt wird und die zeitliche Verzögerung zwischen der Modell-Temperatur und der Ist-Temperatur des Gases kleiner ist als die zeitliche Verzögerung zwischen der Mess-Temperatur und der Ist-Temperatur des Gases, wobei wenigstens ein Prüfparameter für eine Leckage, insbesondere Leckagemenge, an Gas und/oder Hydraulikflüssigkeit in dem wenigstens einen Druckspeicher berechnet wird und mit wenigstens einem zulässigen Prüfparameterbereich verglichen wird und bei einem Wert des wenigstens einen Prüfparameters außerhalb des wenigstens einen zulässigen Prüfparameterbereiches wenigstens eine Schadensmaßnahme eingeleitet wird.

In einer ergänzenden Ausgestaltung umfasst der Antriebsstrang einen Hochdruckspeicher und einen Niederdruckspeicher mit jeweils einem Hydraulikflüssigkeitsraum und einem Gasraum und vorzugsweise das aktuelle spezifische Volumen des Gases in dem Hochdruckspeicher aus der Zustandsgleichung der idealen oder realen Gase mit der Modell-Temperatur und dem Mess-Druck des Gases in dem Hochdruckspeicher berechnet wird und vorzugsweise das aktuelle spezifische Volumen des Gases in dem Niederdruckspeicher aus der Zustandsgleichung der idealen oder realen Gase mit der Modell-Temperatur und dem Mess-Druck des Gases in dem Niederdruckspeicher berechnet wird.

In einer weiteren Ausgestaltung wird für die Berechnung des wenigstens einen Prüfparameters davon ausgegangen, dass der Hochdruckspeicher ein konstantes konstruktiv bedingtes Gesamtvolumen als der Summe aus dem aktuellen veränderlichen Volumen des Gases und dem aktuellen veränderlichen Volumen der Hydraulikflüssigkeit aufweist und der Niederdruckspeicher ein konstantes konstruktiv bedingtes Gesamtvolumen als der Summe aus dem aktuellen veränderlichen Volumen des Gases und dem aktuellen veränderlichen Volumen der Hydraulikflüssigkeit aufweist.

In einer ergänzenden Variante wird für die Berechnung des wenigstens einen Prüfparameters davon ausgegangen, dass das aktuelle veränderlichen Volumen des Gases in dem Hochdruckspeicher das Produkt ist aus der Stoffmenge oder/bzw. der Masse des Gases in dem Hochdruckspeicher und dem aktuellen spezifische Volumen des Gases in dem Hochdruckspeicher und das aktuelle veränderlichen Volumen des Gases in dem Niederdruckspeicher das Produkt ist aus der Stoffmenge oder/bzw. der Masse des Gases in dem Niederdruckspeicher und dem aktuellen spezifische Volumen des Gases in dem Niederdruckspeicher.

In einer weiteren Ausgestaltung wird die Stoffmenge oder/bzw. die Masse des Gases in dem Hochdruckspeicher und die Stoffmenge bzw. die Masse des Gases in dem Niederdruckspeicher berechnet und in Abhängigkeit von der Stoffmenge oder/bzw. der Masse des Gases in dem Hochdruckspeicher und von der Stoffmenge oder/bzw. der Masse des Gases in dem Niederdruckspeicher ein erster Prüfparameter berechnet wird.

In einer zusätzlichen Ausführungsform wird der erste Prüfparameter berechnet mit einer Division der Stoffmenge oder/bzw. der Masse des Gases in dem Niederdruckspeicher durch die Stoffmenge oder/bzw. die Masse des Gases in dem Hochdruckspeicher.

Zweckmäßig wird ein zweiter Prüfparameter berechnet in Abhängigkeit von dem konstruktiv bedingten Gesamtvolumen des Hoch- und Niederdruckspeichers und von dem Volumen der Hydraulikflüssigkeit in dem Hoch- und Niederdruckspeicher und von der Stoffmenge oder/bzw. der Masse des Gases in dem Hochdruckspeicher.

In einer weiteren Ausgestaltung wird der zweite Prüfparameter berechnet mit der Differenz aus dem Gesamtvolumen des Hoch- und Niederdruckspeichers und dem Volumen der Hydraulikflüssigkeit in dem Hoch- und Niederdruckspeicher und das Ergebnis dieser Differenz dividiert wird durch die Stoffmenge oder/bzw. die Masse des Gases in dem Hochdruckspeicher.

In einer ergänzenden Variante wird für die Berechnung des wenigstens einen Prüfparameters ein funktionaler Zusammenhang zwischen dem aktuellen spezifischen Volumen des Gases in dem Niederdruckspeicher und dem aktuellen spezifischen Volumen des Gases in dem Hochdruckspeicher berechnet.

In einer weiteren Ausführungsform wird für die Berechnung des wenigstens einen Prüfparameters ein funktionaler direkt oder indirekt proportionaler Zusammenhang zwischen dem aktuellen spezifischen Volumen des Gases in dem Niederdruckspeicher und dem aktuellen spezifische Volumen des Gases in dem Hochdruckspeicher berechnet.

In einer Variante wird als Proportionalitätskonstante der zweite Prüfparameter verwendet und/oder als additive Konstante wird der erste Prüfparameter verwendet.

In einer ergänzenden Ausgestaltung wird die Berechnung des wenigstens einen Prüfparameters mit dem Verfahren nach dem kleinsten Fehlerquadrat ausgeführt. Zweckmäßig werden noch andere Berechnungsverfahren zusätzlich ausgeführt für die Berechnung des wenigstens einen Prüfparameters.

In einer weiteren Variante entspricht die zeitliche Verzögerung zwischen der Modell-Temperatur und der Ist-Temperatur des Gases im Wesentlichen der ersten zeitlichen Verzögerung. Die Modell-Temperatur weist somit eine kleinere zeitliche Verzögerung auf als die Mess-Temperatur, so dass für den aktuellen augenblicklichen Zustand des Gases die Temperatur mit einer größeren Genauigkeit zu der Ist-Temperatur des Gases bestimmt wird.

In einer zusätzlichen Ausführungsform entspricht die zeitliche Verzögerung zwischen der Modell-Temperatur und der Ist-Temperatur des Gases weniger als das 20-, 10-, 5-, 2- oder 0,2-Fache der ersten zeitlichen Verzögerung.

In einer weiteren Ausgestaltung wird mit der Modellberechnung ein Korrekturfaktor berechnet und die Modell-Temperatur aus der Summe der Mess-Temperatur und dem Produkt aus dem Korrekturfaktor und dem Mess-Druck bestimmt und/oder die Modell-Temperatur wird in Abhängigkeit von der Mess-Temperatur und in Abhängigkeit von dem Mess-Druck bestimmt.

Zweckmäßig wird der Korrekturfaktor in Abhängigkeit von der molaren Gasmasse und/oder der Mess-Temperatur des Gases und/oder dem Mess-Druck des Gases und/oder der Änderung des Mess-Druckes pro Zeiteinheit bestimmt.

In einer ergänzenden Variante wird bei der Modellberechnung die Stoffmenge des Gases in dem wenigstens einen Druckspeicher und/oder die Wärmeleitfähigkeit einer Wandung des wenigstens einen Druckspeichers und/oder die Oberfläche der Wandung des wenigstens einen Druckspeichers und/oder das Verhältnis aus der Wärmespeicherkapazität des Gases in dem wenigstens einen Druckspeicher zu der Wärmeleitfähigkeit der Wandung des wenigstens einen Druckspeichers und/oder die erste zeitliche Verzögerung und/oder die zweite zeitliche Verzögerung berücksichtigt.

In einer weiteren Ausgestaltung wird aus der Modell-Temperatur des Gases und dem Mess-Druck des Gases das Volumen des Gases als Parameter für den Ladezustand des wenigstens einen Druckspeichers bestimmt.

In einer zusätzlichen Ausführungsform wird das Volumen des Gases als Parameter für den Ladezustand des wenigstens einen Druckspeichers mit der thermischen Zustandsgleichung idealer oder realer Gase aus der Modell-Temperatur, dem Mess-Druck, der Stoffmenge des Gases in dem wenigstens einen Druckspeicher und der molaren Gaskonstante bestimmt.

In einer weiteren Ausgestaltung wird in Abhängigkeit von dem bestimmten Volumen des Gases und/oder von dem wenigstens einen Prüfparameter für die Leckage, insbesondere Leckagemenge, an Gas und/oder Hydraulikflüssigkeit der Antriebsstrang gesteuert und/oder geregelt, insbesondere das Einleiten der Hydraulikflüssigkeit in den wenigstens einen Druckspeicher und/oder das Ausleiten der Hydraulikflüssigkeit aus dem wenigstens einen Druckspeicher in Abhängigkeit von dem wenigstens einen Prüfparameter für die Leckage, insbesondere Leckagemenge, an Gas und/oder Hydraulikflüssigkeit und/oder von dem bestimmten Volumen des Gases gesteuert und/oder geregelt. Der aktuelle Prüfparameter bzw. die Leckage kann somit genau berechnet werden, so dass abhängig hiervon wenigstens eine Schadensmaßnahme ausgeführt wird. In einer weiteren Variante wird das Verfahren für einen Kolbenspeicher und/oder Blasenspeicher als dem wenigstens einen Druckspeicher ausgeführt.

In einer ergänzenden Variante wird in einem Rekuperationsbetrieb kinetische Energie des Kraftfahrzeuges und/oder Antriebsenergie eines Verbrennungsmotors des Kraftfahrzeuges in hydraulische Energie von einer hydraulischen Pumpe umgewandelt und in einem Druckspeicher gespeichert, indem Hydraulikflüssigkeit in den Druckspeicher mit der hydraulischen Pumpe eingeleitet wird und ein Gasvolumen in dem Druckspeicher reduziert wird und die Ist-Temperatur und der Ist-Druck des Gases erhöht wird.

In einer weiteren Ausführungsform wird in einem hydraulischen Antriebszustand hydraulische Energie von einem hydraulischen Motor in mechanische Energie umgewandelt und mit der mechanischen Energie das Kraftfahrzeug angetrieben wird, indem Hydraulikflüssigkeit aus dem Druckspeicher ausgeleitet und zu dem hydraulischen Motor geleitet wird und ein Gasvolumen in dem Druckspeicher erhöht wird und die Ist-Temperatur und der Ist-Druck des Gases reduziert wird.

Erfindungsgemäßer Antriebsstrang für ein Kraftfahrzeug, umfassend wenigstens eine hydraulische Pumpe und wenigstens einen hydraulischen Motor zur Umwandlung von mechanischer Energie in hydraulische Energie und umgekehrt, wenigstens einen Druckspeicher, wobei mit dem Antriebsstrang ein in dieser Schutzrechtsanmeldung beschriebenes Verfahren ausführbar ist.

In einer weiteren Ausgestaltung ist eine hydraulische Pumpe und ein hydraulischer Motor von einer Schrägscheibenmaschine gebildet, insbesondere umfasst der Antriebsstrang zwei Schrägscheibenmaschinen, welche hydraulisch miteinander verbunden sind und als hydraulisches Getriebe fungieren, und/oder der Antriebsstrang zwei Druckspeicher als Hochdruckspeicher und Niederdruckspeicher umfasst und/oder der wenigstens eine Druckspeicher als ein Kolbenspeicher und/oder ein Blasenspeicher ausgebildet ist.

In einer zusätzlichen Ausgestaltung umfasst der wenigstens eine Druckspeicher je einen Temperatursensor zur Erfassung der Mess-Temperatur des Gases und je einen Drucksensor zur Erfassung eines Mess-Druckes des Gases und/oder der Antriebsstrang eine Recheneinheit mit einem Rechner und einem Datenspeicher umfasst.

In einer weiteren Ausgestaltung umfasst der Antriebsstrang einen mechanischen und hydraulischen Antriebsteilstrang.

In einer weiteren Ausführungsform umfasst die Schrägscheibenmaschine eine Wiegenlagerung für die Schwenkwiege.

Zweckmäßig umfasst die Schrägscheibenmaschine wenigstens eine Schwenkeinrichtung zum Verschwenken der Schwenkwiege.

Erfindungsgemäßes Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit oder einer Steuerungseinheit durchgeführt wird.

Erfindungsgemäßes Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit oder einer Steuerungseinheit durchgeführt wird.

Im Nachfolgenden wird ein Ausführungsbeispiel der Erfindung unter Bezugnahme auf die beigefügten Zeichnungen näher beschrieben. Es zeigt:

Fig. 1   einen stark vereinfachte Darstellung eines Antriebsstranges,

Fig. 2   einen Längsschnitt eines Kolbenspeichers und

Fig. 3   einen Längsschnitt eines Blasenspeichers.

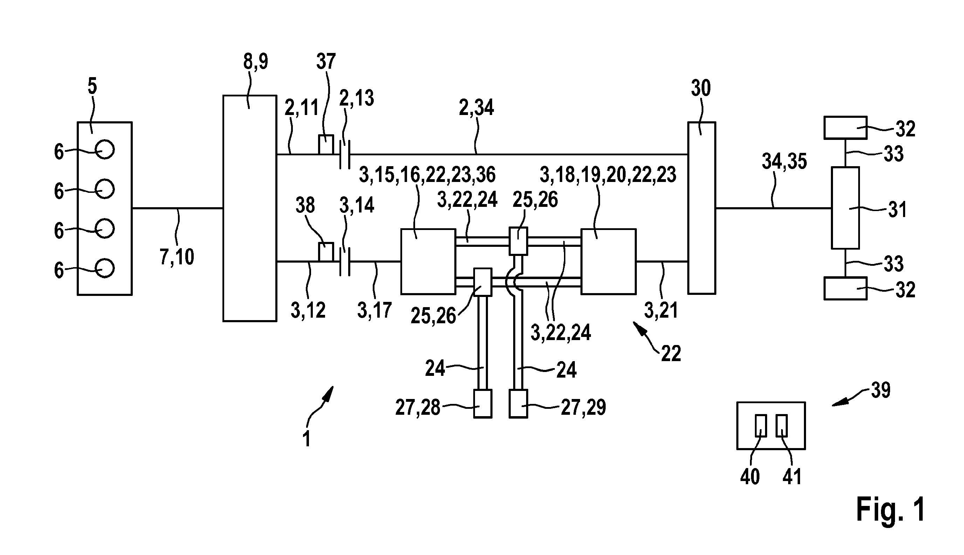

Ausführungsformen der Erfindung Ein in Fig. 1 dargestellter Antriebsstrang 1 dient zur Kraftübertragung bzw. zur Übertragung von mechanischer Energie von einem Verbrennungsmotor 5 mit Hubkolben 6 zu zwei Antriebsrädern 32 eines nicht dargestellten Kraftfahrzeuges. Der Antriebsstrang 1 ist dabei in einem mechanischen Antriebsteilstrang 2 unterteilt und in einen hydraulischen Antriebsteilstrang 3 mit einem hydraulischen Getriebe 22 in dem mechanische Energie in hydraulische Energie umgewandelt wird und umgekehrt.

Eine Motorwelle 7 des Verbrennungsmotors 5 treibt eine Antriebswelle 10 eines Leistungsverzweigungsgetriebes 8, z. B. eines Planetengetriebes 9 an. Das Planetengetriebe 9 treibt mit der von der Motorwelle 7 auf das Leistungsverzweigungsgetriebe 9 übertragenen mechanischen Energie eine erste Abtriebswelle 11 und eine zweite Abtriebswelle 12 des Leistungsverzweigungsgetriebes 8 an. Die erste Abtriebswelle 11 des Leistungsverzweigungsgetriebes 8 treibt den mechanischen Antriebsteilstrang 2 mit einem nicht dargestellten mechanischen Getriebe und die zweite Abtriebswelle 12 des Leistungsverzweigungsgetriebes 8 treibt den hydraulischen Antriebsteilstrang 3 an. Der mechanische Antriebsteilstrang 2 weist neben der ersten Abtriebswelle 11 eine erste Kupplung 13 auf mit welcher eine Übertragungswelle 34 verbunden ist. Dadurch kann bei einer eingekuppelten ersten Kupplung 13 die mechanische Energie von der ersten Abtriebswelle 11 auf die Übertragungswelle 34 des ersten mechanischen Antriebsteilstranges 2 übertragen werden und von dieser auf eine mechanische Kopplungseinheit 30. Bei einer ausgekuppelten ersten Kupplung 13 ist mit einer ersten Festsetzeinrichtung 37 die erste Abtriebswelle 11 festgehalten, so dass die gesamte mechanische Energie von dem Planetengetriebe 9 auf die zweite Abtriebswelle 12 übertragen wird. Die mechanische Kopplungseinheit 30 führt die mechanische Energie von dem mechanischen Antriebsteilstrang 2, d. h. der Übertragungswelle 34 und einer Hydraulikgetriebeantriebswelle 21 zusammen. Dabei ist die mechanische Kopplungseinheit 30 mit Zahnrädern beispielsweise dahingehend ausgebildet, dass die Übertragungswelle 34 des mechanischen Antriebsteilstranges 2 und die Hydraulikgetriebeantriebswelle 21 das gleiche Drehzahlverhältnis aufweisen. Von der mechanischen Kopplungseinheit 30 wird mit der Übertragungswelle 34 als Differential-Antriebswelle 35 die mechanische Energie auf ein Differentialgetriebe 31 angetrieben. Das Differentialgetriebe 31 treibt durch zwei Radwellen 33 jeweils ein Antriebsrad 32 des nicht dargestellten Kraftfahrzeuges an.

Der hydraulische Antriebsteilstrang 3 wird von der zweiten Abtriebswelle 12 des Leistungsverzweigungsgetriebes 8 angetrieben. Dabei kann in analoger Weise wie bei dem mechanischen Antriebsteilstrang 2 der Kraftfluss von der zweiten Abtriebswelle 12 zu einer Antriebswelle 17 einer ersten Schrägscheibenmaschine 15 mit einer zweiten Kupplung 14 gelöst und verbunden werden. Bei der gelösten zweiten Kupplung 14 ist mit einer zweiten Festsetzeinrichtung 38 die zweite Abtriebswelle 12 festgehalten, so dass von dem Planetengetriebe 9 die gesamte mechanische Energie auf die erste Abtriebswelle 11 übertragen wird. Abweichend von der in Fig. 1 dargestellten zweiten Kupplung 14 als mechanischer Kupplung 14 kann der hydraulische Antriebsteilstrang 3 auch mit einer hydraulischen Kupplung ohne einer mechanischen Kupplung 14 ausgebildet sein. Das hydraulische Getriebe 22 weist die erste Schrägscheibenmaschine 15 und eine zweite Schrägscheibenmaschine 18 auf. Die beiden Schrägscheibenmaschinen 15, 18 stellen dabei eine Komponente 23 des hydraulischen Getriebes 22 dar. Die erste Schrägscheibenmaschine 15 kann dabei sowohl als Axialkolbenpumpe 16 als auch als Axialkolbenmotor 36 betrieben werden und die zweite Schrägscheibenmaschine 18 sowohl als Axialkolbenpumpe 19 und als Axialkolbenmotor 20. Von der zweiten Schrägscheibenmaschine 18 wird die hydraulische Energie in mechanische Energie umgewandelt und dadurch eine Antriebswelle 21 bzw. eine Hydraulikgetriebeantriebswelle 21 angetrieben, welche ihrerseits diese mechanische Energie auf die mechanische Kopplungseinheit 30 und dadurch mittelbar auch auf die beiden Antriebsräder 32 überträgt. Die beiden Schrägscheibenmaschinen 15, 18 sind mit zwei Hydraulikleitungen 24 miteinander hydraulisch verbunden. Dabei ist in jeder der beiden Hydraulikleitungen 24 ein als 3-Wegeventil 26 ausgebildetes Ventil 25 vorhanden, so dass dadurch die beiden Schrägscheibenmaschinen 15, 18 auch hydraulisch mit zwei Druckspeichern 27, nämlich einem Hochdruckspeicher 28 und einem Niederdruckspeicher 29, hydraulisch verbunden werden können.

Die beiden Schrägscheibenmaschinen 15, 18 weisen eine rotierende Zylindertrommel (nicht dargestellt) auf, in denen Kolben in Kolbenbohrungen axial beweglich sind. Ein Schrägscheibe bzw. eine Schwenkwiege der beiden Schrägscheibenmaschinen 15, 18 ist um einen Schwenkwinkel verschwenkbar und je größer der Schwenkwinkel ist, desto größer ist der förderbare Volumenstrom der Schrägscheibenmaschinen 15, 18 bei einer gleichen Drehzahl der Antriebswelle 17 und der Antriebswelle 21 bzw. Hydraulikgetriebeantriebswelle 21. Wird während des Betriebes des hydraulischen Getriebes 22 keine Hydraulikflüssigkeit in oder aus einem Druckspeicher 27 geleitet, weisen beide Schwenkwiegen der beiden Schrägscheibenmaschinen 15, 18 den gleichen Schwenkwinkel auf, da beide Schrägscheibenmaschinen 15, 18 identisch ausgebildet sind, d. h. insbesondere eine gleiche Anzahl von Kolbenbohrungen mit identischen Durchmessern in den Zylindertrommeln aufweisen und die Antriebswelle 17 und die Hydraulikantriebswelle 21 die gleiche Drehzahl aufweisen. Unterschiedliche Drehzahlen der Antriebswelle 17 und der Hydraulikgetriebeantriebswelle 21 können mit unterschiedlichen Schwenkwinkeln der Schwenkwiegen der ersten und zweiten Schrägscheibenmaschine 15, 18 erreicht werden.

Bei einem Betrieb der beiden Schrägscheibenmaschinen 15, 18 ausschließlich als hydraulisches Getriebe 22 wird mit den beiden Hydraulikleitungen 24 hydraulische Energie von der ersten Schrägscheibenmaschine 15 zu der zweiten Schrägscheibenmaschine 18 übertragen und je größer der Schwenkwinkel der beiden Schrägscheibenmaschinen 15, 18 ist, desto größer ist der Volumenstrom der Hydraulikflüssigkeit, welche von der ersten zu der zweiten Schrägscheibenmaschine 15, 18 strömt und umgekehrt und desto größer ist das Drehmoment an der Antriebswelle 17 und der Hydraulikgetriebeantriebswelle 21 und umgekehrt. Durch ein Verändern des Schwenkwinkels von einem oder von beiden Schrägscheibenmaschinen 15, 18 bei einem verschiedenen Schwenkwinkel der beiden Schrägscheibenmaschinen 15, 18 kann das Verhältnis zwischen der Drehzahl der Antriebswelle 17 und der Hydraulikgetriebeantriebswelle 21 verändert werden und zwar stufenlos, so dass dadurch ein stufenloses hydraulisches Getriebe 22 vorhanden ist.

In einem Rekuperationsbetrieb des Kraftfahrzeuges wird die mechanische Energie von den Antriebsrädern 32 auf die zweite Schrägscheibenmaschine 18 übertragen und in dieser in hydraulische Energie umgewandelt. Dabei kann mittels der beiden 3-Wegeventile 26 Hydraulikflüssigkeit während des Rekuperationsbetriebes von dem Niederdruckspeicher 29 in die zweiten Schrägscheibenmaschine 18 als Axialkolbenpumpe 19 und von dieser unter einem höheren Druck in den Hochdruckspeicher 28 eingeleitet werden, d. h. der Druck in dem Hochdruckspeicher 28 erhöht werden und dadurch hydraulische Energie in dem Hochdruckspeicher 28 gespeichert werden. Zum hydraulischen Antrieb des Kraftfahrzeuges wird umgekehrt die Hydraulikflüssigkeit unter Hochdruck von dem Hochdruckspeicher 28 zu der zweiten Schrägscheibenmaschine 18 geleitet, welche hier als Axialkolbenmotor 20 fungiert und in mechanische Energie umgewandelt, so dass dadurch mit der zweiten Schrägscheibenmaschine 18 als Axialkolbenmotor 20 die Hydraulikgetriebeantriebswelle 21 mechanisch angetrieben wird. Die Hydraulikflüssigkeit wird dabei anschließend von der zweiten Schrägscheibenmaschine 18 zu dem Niederdruckspeicher 29 geleitet.

Die beiden Antriebsräder 32 des Kraftfahrzeuges können dabei entweder ausschließlich von dem mechanischen Antriebsteilstrang 2 angetrieben werden, sofern die zweite Kupplung 14 ausgekuppelt ist, oder ausschließlich von dem hydraulischen Antriebsstrang 3 angetrieben werden, sofern die erste Kupplung 13 ausgekuppelt ist, wobei die jeweils andere Kupplung 13, 14 natürlich eingekuppelt ist. Darüber hinaus können die beiden Antriebsräder 32 auch gleichzeitig sowohl von dem mechanischen Antriebsstrang 2 als auch von dem hydraulischen Antriebsstrang 3 angetrieben werden, sofern beide Kupplungen 13, 14 eingekuppelt sind. Dabei kann während dieses Betriebes die zweite Schrägscheibenmaschine 18 entweder ausschließlich von Hydraulikflüssigkeit aus der ersten Schrägscheibenmaschine 15 angetrieben werden, so dass die zweite Schrägscheibenmaschine 18 ausschließlich mit mechanischer Energie von dem Verbrennungsmotor 5 angetrieben ist. Optional kann zusätzlich während dieses Betriebes die zweite Schrägscheibenmaschine 18 auch von Hydraulikflüssigkeit aus dem Hochdruckspeicher 28 angetrieben werden, so dass dadurch die zweite Schrägscheibenmaschine 18 sowohl von mechanischer Energie aus dem Verbrennungsmotor 5 als auch von hydraulischer Energie aus dem Hochdruckspeicher 28 angetrieben ist. In diesem letztgenannten Antriebsfall werden somit die beiden Antriebsräder 32 sowohl mit mechanischer Energie von dem Verbrennungsmotor 5 als auch mit hydraulischer Energie von dem Hochdruckspeicher 28 angetrieben.

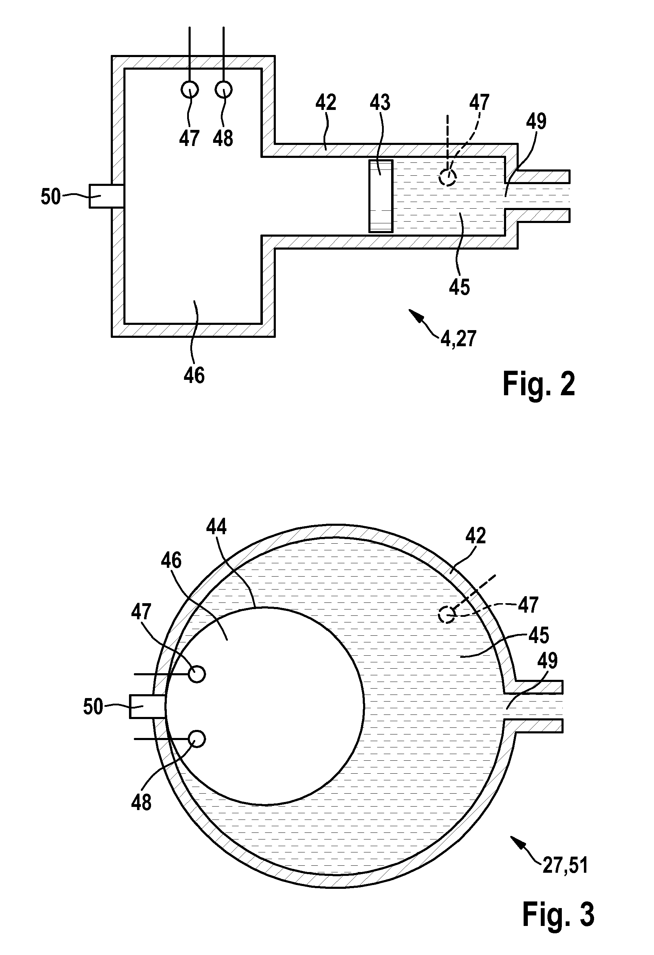

Die beiden Druckspeicher 27 als Hochdruckspeicher 28 und als Niederdruckspeicher 29 sind beispielsweise als ein Kolbenspeicher 4 (Fig. 2) oder ein Blasenspeicher 51 (Fig. 3) ausgebildet. Der Kolbenspeicher 4 weist eine Wandung 42 aus Stahl auf und die Wandung 42 bildet auch einen Zylinder zur Lagerung eines Kolbens 43. Der Kolben 43 trennt einen von der Wandung 42 eingeschlossenen Gesamtraum als Gesamtvolumen in einen Hydraulikflüssigkeitsraum 45, welcher nur mit Hydraulikflüssigkeit befüllt ist und in einen Gasraum 46, welcher nur mit Gas, z. B. Luft oder Stickstoff, befüllt ist. Wird in den Kolbenspeicher 4 durch eine Ein- und Auslassöffnung 49 Hydraulikflüssigkeit eingeleitet, wird der Kolben 43 von der nicht kompressiblen Hydraulikflüssigkeit nach links bewegt, so dass das Volumen des Gasraumes 46 reduziert wird, d. h. die Ist-Temperatur und der Ist-Druck des Gases erhöht wird, weil die Hydraulikflüssigkeit in einer relativ kurzen Zeit durch die Ein- und Auslassöffnung 49 eingeleitet wird, so dass dadurch der Ladezustand des Kolbenspeichers 4 erhöht wird und dies auch umgekehrt ausgeführt werden kann. Ein Drucksensor 47 erfasst einen Mess-Druck des Gases in dem Gasraum 46 und ein Temperatursensor 48 erfasst eine Mess-Temperatur des Gases in dem Gasraum 46. Der Drucksensor 47 (strichliert dargestellt) kann auch in dem Hydraulikflüssigkeitsraum 45 angeordnet sein, weil der Druck des Gases in dem Gasraum 46 identisch ist zu dem Druck der Hydraulikflüssigkeit in dem Hydraulikflüssigkeitsraum 45. Ein Füllventil 50 dient zur Befüllung und Entleerung des Gasraumes 46 mit Gas. Bei der Befüllung wird die Stoffmenge n des Gases erfasst als auch die molare Gaskonstante R des Gases. Damit ist im Betrieb des Kolbenspeichers 4 die Stoffmenge n konstant und somit sowohl die Stoffmenge n als auch die molare Gaskonstante R bekannt, sofern keine Leckage auftritt.

In Fig. 3 ist ein Blasenspeicher 51 dargestellt. Im Nachfolgenden werden im Wesentlichen nur die Unterschiede zu dem in Fig. 2 dargestellten Kolbenspeicher 4 beschrieben. Der Hydraulikflüssigkeitsraum 45 ist durch eine elastische Blase 44 aus Kunststoff von dem Gasraum 46 getrennt. Durch ein Einleiten von Hydraulikflüssigkeit durch die Ein- und Auslassöffnung 49 in den Hydraulikflüssigkeitsraum 45 wird das Volumen des von der Blase 44 eingeschlossenen Gasraumes 46 reduziert und umgekehrt.

Die Bestimmung des Ladezustandes der beiden Druckspeicher 27 erfolgt durch eine Bestimmung des Volumens des Gases mit Hilfe der thermischen Zustandsgleichung idealer Gase:

$$PV = nRT$$

Dabei ist P der Druck des Gases, V das Volumen des Gases, n die Stoffmenge des Gases, R die molare universelle Gaskonstante und T die Temperatur des Gases. Zur Berechnung des Volumens des Gases ergibt sich somit aus der obigen thermischen Zustandsgleichung idealer Gase:

$$V = \frac{nRT}{P}$$

Es ist somit eine möglichst genaue Kenntnis des aktuellen Temperatur T bzw. $T_g$ und des Druckes P des Gases in dem Gasraum 46 erforderlich, weil die Stoffmenge n des Gases und die molare Gaskonstante R konstant sind. Das Ein- und Ausleiten der Hydraulikflüssigkeit erfolgt dabei relativ schnell im Bereich von beispielsweise 5 bis 50 s, vorzugsweise 10 bis 20 s.

Der Drucksensor 47 erfasst als Mess-Druck den Ist-Druck mit einer ersten zeitlichen Verzögerung von ungefähr 0,01 s und der Temperatursensor 48 erfasst als Mess-Temperatur die Ist-Temperatur mit einer zweiten zeitlichen Verzögerung von ungefähr 2 bis 3 s. Die zweite zeitliche Verzögerung des Temperatursensors 48 ist somit wesentlich größer als die erste zeitliche Verzögerung des Drucksensors 47. Zur Berechnung des aktuellen Volumens des Gases in dem Gasraum 46 mit der thermischen Zustandsgleichung des Gases bei einer bekannten Stoffmenge n und molaren Gaskonstante R des Gases ist eine möglichst genaue Kenntnis des Druckes und der Temperatur zur gleichen aktuellen Zeit erforderlich, um das Volumen des Gases möglichst genau berechnen zu können. Hierzu wird mit einer Modellberechnung von einer Recheneinheit 39, z. B. einem Bordcomputer des Kraftfahrzeuges, mit einem Rechner 40 bzw. Computer 40 und einem Datenspeicher 41 eine Modell-Temperatur bestimmt bzw. berechnet.

Die Änderung der Enthalpie $\Delta H$ des Gases in dem Gasraum 46 bei dem Ein- oder Ausleiten von Hydraulikflüssigkeit aus dem oder in den Hydraulikflüssigkeitsraum 45 ergibt sich zu:

$$\Delta H = \frac{dQ}{dt} + V \cdot \frac{dP}{dt}$$

Hieraus ergibt sich mit der thermischen Zustandsgleichung idealer Gase die nachfolgende Differentialgleichung für die Änderung der Enthalpie $\Delta H$ des Gases:

$$nC_p \frac{dT_g}{dt} = \frac{dQ}{dt} + \frac{nRT_g}{P} \cdot \frac{dP}{dt}$$

Dabei ist $C_p$ die spezifische Wärmekapazität des Gases pro Stoffmenge, $T_g$ die Temperatur des Gases, Q die Wärmeverluste des Gases in die Umgebung, P der Druck des Gases und n die Anzahl der Mole des Gases bzw. die Stoffmenge des Gases.

Der Wärmeverlust Q des Gases in die Umgebung (negatives Vorzeigen bei Wärmegewinn aus der Umgebung) ergibt sich aus:

$$\frac{dQ}{dt} = \sum_{i=1}^{n} K_i(T_i - T_g)$$

Dabei ist $T_i$ die Temperatur des i-ten umgebenden Elementes um den Gasraum 46 und $K_i$ die Wärme-

leitfähigkeit des i-ten umgebenden Elementes. Beispielsweise ist bei dem Kolbenspeicher 4 das erste umgebende Element die Wandung 42 unmittelbar an dem Gasraum 46 und das zweite umgebende Element ist der Kolben 43.

Die Temperatur $T_{i+1}$ des Gases kann interativ bestimmt werden mit:

$$T_{i+1} = \frac{dT_i}{dt} \times \Delta t$$

Die Temperatur des Gases ist auch abhängig von der Temperatur der umgebenden Elemente, so dass die Temperatur der umgebenden Elemente eigentlich auch iterativ angenähert werden müsste. Dies würde Kenntnisse des Druckspeichers 27 bezüglich der geometrischen Größen, beispielsweise der Oberfläche und der thermischen Eigenschaften der umgebenden Elemente erfordern, um die Temperatur der umgebenden Elemente ausreichend genau iterativ annähern zu können.

Die vorliegende Modellberechnung geht von einem Drucksensor 27 mit einer kurzen ersten zeitlichen Verzögerung und einem Temperatursensor 48 mit einer großen zweiten zeitlichen Verzögerung aus ohne dass eine iterative Annäherung der Temperatur der umgebenden Elemente notwendig ist.

Die Wärmeverluste $Q_w$ durch die umgebenden Elemente bzw. die Wände 42 in die Umgebung kann nachfolgend berechnet werden:

$$\frac{dQ_w}{dt} = \sum_{i=1}^{n} K_i (T_i - T_g)$$

Die Temperaturänderung $T_w$ des Gases aufgrund der Wärmeverluste durch die umgebenden Elemente bzw. die Wände 42 ergibt sich aus:

$$\frac{dT_w}{dt} = \frac{1}{mc} \sum_{i=1}^{n} K_i (T_i - T_g)$$

Dabei m die Masse des Gases und c die spezifische Wärmekapazität des Gases pro Masseneinheit.

Bei thermodynamischen Systemen wird eine konstante Zeit $\tau$ bestimmt, welche angibt nach welcher Zeit 63,2 % der maximal möglichen Temperaturänderung erreicht wird. Wird beispielsweise das Gas von 300 K um 30 K auf 270 K abgekühlt aufgrund einer Volumenerhöhung in einer fiktiven Zeit von 0 s und beträgt die Temperatur der Umgebung konstant 300 K erwärmt sich das Gas nach einer unendlichen Zeit wieder auf 300 K aufgrund der Wärmegewinne durch die umgebenden Elemente bzw. die Wände 42. Dabei gibt die konstante Zeit $\tau$ an, nach welcher Zeit 63,2 % der Erwärmung, d. h. in diesem Beispiel eine Erwärmung um 18,96 K auf 288,96 K eingetreten ist.

$$\tau = \left[ \frac{1}{nC_p} \sum_{i=1}^{n} K_i \right]^{-1}$$

Dabei ist $nC_p$ groß und $\sum_{i=1}^{n} K_i$ klein bei dem Druckspeicher 27, so dass sich eine konstante Zeit $\tau$ von einigen 10 s, beispielsweise 10 s, ergibt. Damit weist der Druckspeicher 27 eine Änderungsfrequenz von f = 0,1 Hz auf.

Der Drucksensor 47 weist beispielsweise eine erste zeitliche Verzögerung von 0,01 s auf, so dass der Drucksensors 47 eine Abtastfrequenz f von 100 Hz aufweist. Der Temperatursensor 48 weist beispielsweise eine zweite Verzögerung von 2 s auf, d. h. der Temperatursensor 48 weist eine Abtastfrequenz f von 0,5 Hz auf. Nach dem Nyquist-Shannonschen Abtasttheorem kann ein Signal, hier die Änderungsfrequenz $f_{max}$ = 0,1 Hz des Druckspeichers 27, mit einer Abtastfrequenz von mindestens 2 $f_{max}$ abgetastet werden, d. h. es ist eine Abtastfrequenz von mindestens 0,2 Hz erforderlich. Dabei weisen sowohl der Drucksensor 47 als auch der Temperatursensor 48 eine Abtastfrequenz von mindestens 0,2 Hz auf, so dass mit dem Drucksensor 47 und dem Temperatursensor 48 die Änderung der Temperatur $T_g$ des Gases in dem Druckspeicher 27 aufgrund der Wärmeverluste bzw. Wärmegewinne durch die umgebenden Elemente bzw. die Wände 42 erfasst werden kann.

Die bereits von oben bekannte Differentialgleichung für die Änderung der Enthalpie des Gases

$$nC_p \frac{dT_g}{dt} = \frac{dQ}{dt} + \frac{nRT_g}{P} \cdot \frac{dP}{dt}$$

kann somit in einen Hochfrequenzanteil HF mit einer Frequenz größer als der Abtastfrequenz f = 0,5 Hz des Temperatursensors 48 und in einen Niederfrequenzanteil NF mit einer Frequenz kleiner als der Abtastfrequenz f = 0,5 Hz des Temperatursensors 48 aufgeteilt werden:

$$\left[ nC_p \frac{dT_g}{dt} \right]_{LF} = \left[ \frac{dQ}{dt} \right]_{LF} + \left[ \frac{nRT_g}{P} \cdot \frac{dP}{dt} \right]_{LF}$$

$$\left[ nC_p \frac{dT_g}{dt} \right]_{HF} = \left[ \frac{nRT_g}{P} \cdot \frac{dP}{dt} \right]_{HF}$$

Da die Frequenzgrenze zwischen dem Hochfrequenzanteil HF und dem Niederfrequenzanteil NF bei f = 0,5 Hz liegt enthält der Niederfrequenzanteil NF nicht den Summanden dQ/dt, weil dieser Summand für Wärmeverluste durch die umgebenden Elemente bzw. die Wände 42 des Gases aufgrund der Änderungsfrequenz von f = 0,1 Hz des Druckspeichers 27 nicht erfasst werden kann.

Bei einer Division der beiden obigen Gleichungen mit $nC_p$ ergeben sich die nachfolgenden Differentialgleichungen:

$$\left[\frac{dT_g}{dt}\right]_{LF} = \left(\left[\frac{dQ}{dt}\right]_{LF} + \left[\frac{nRT_g}{P}\cdot\frac{dP}{dt}\right]_{LF}\right)\frac{1}{nC_p}$$

$$\left[\frac{dT_g}{dt}\right]_{HF} = \frac{1}{nC_p}\left[\frac{nRT_g}{P}\cdot\frac{dP}{dt}\right]_{HF}$$

Die aktuelle Temperatur $T_g$ des Gases ergibt sich aus der Summe der beiden obigen Gleichungen, weil der Hochfrequenzanteil HF und der Niederfrequenzanteil NF wieder zusammengeführt bzw. aufaddiert werden müssen:

$$\left[\frac{dT_g}{dt}\right] = \left[\frac{dT_g}{dt}\right]_{LF} + \left[\frac{dT_g}{dt}\right]_{HF}$$

Dabei ist $T_g$ in dem Niederfrequenzanteil LF die von dem Temperatursensor erfasste Mess-Temperatur $T_{sensor}$.

$$\left[\frac{dT_g}{dt}\right]_{LF} = \left[\frac{dT_{sensor}}{dt}\right]$$

Die aktuelle Modelltemperatur des Gases $T_g$ ergibt sich somit zu:

$$\frac{dT_g}{dt} = \frac{dT_{sensor}}{dt} + \left[\frac{RT_g}{C_pP}\cdot\frac{dP}{dt}\right]_{HF}$$

Dabei ist in der obigen Differentialgleichung der zweite Summand K ein Korrekturfaktor als Hochfrequenzfilter für den von dem Drucksensor 47 erfassten Mess-Druck und mit der obigen Differentialgleichung wird der Korrekturfaktor K, berechnet, wobei in K auch der Verlauf des Mess-Druckes in Abhängigkeit von der Zeit berücksichtigt wird. Der Korrekturfaktor K ist an bzw. ab der Abtastfrequenz f = 0,5 Hz des Temperatursensors 48.

$$K = \left[\frac{RT_g}{C_pP}\cdot\frac{dP}{dt}\right]$$

Der Mess-Druck des Drucksensors 47 wird mit berechneten Korrekturfaktor K multipliziert und zu diesem ersten Summanden wird die Mess-Temperatur des Temperatursensors 48 als dem zweiten Summanden addiert, so dass die Summe aus dem ersten und zweiten Summanden die aktuelle Modell-Temperatur des Gases in dem Druckspeicher 27 ergibt. Der Korrekturfaktor bzw. Hochfrequenzfilter transformiert den Mess-Druck des Drucksensors 47 dahingehend in einen Temperaturwert, dass sich aus der Summe des ersten und zweiten Summanden mit einer guten Näherung die Ist-Temperatur des Gases ergibt mit einer zeitlichen Verzögerung, welcher im Wesentlichen der ersten zeitlichen Verzögerung des Mess-Druckes entspricht. Die schnellen Messwerte des Drucksensors 47 können somit genutzt werden, um zusammen mit der langsamen Mess-Temperatur des Temperatursensors 48 die Modell-Temperatur zu bestimmen.

Mit der thermischen Zustandsgleichung idealer Gase kann aus der Stoffmenge n, der molaren Masse R, der Modell-Temperatur T bzw. $T_g$ und dem Mess-Druck P des Drucksensors 47 das aktuelle Volumen V des Gases als Parameter für den Ladezustand des Druckspeichers 27 berechnet werden:

$$V = \frac{nRT}{P}$$

Die von der Recheneinheit 39 ausgeführte Modellberechnung ermöglicht es, die aktuelle Temperatur $T_g$ des Gases mit einer geringen zeitlichen Verzögerung bezüglich der Ist-Temperatur des Gases zu bestimmen, so dass der Nachteil der großen zweiten zeitlichen Verzögerung des Temperatursensors 48 im Wesentlich aufgehoben ist und damit das aktuelle Volumen des Gases und damit der Ladezustand des Druckspeichers 27 mit einer hohen Genauigkeit zu der aktuellen Zeit bestimmt werden kann.

Die obigen Berechnungen können anstelle mit der Zustandsgleichung idealer Gase auch mit der Zustandsgleichung realer Gase ausgeführt werden. Die Zustandsgleichung für reale Gase weist zusätzlich den Realgasfaktor Z auf.

Der Antriebsstrang 1 weist den Hochdruckspeicher 28 und den Niederdruckspeicher 29 auf. Die beiden Druckspeicher 27 sind jeweils mit dem Gasraum 46 und dem Hydraulikarbeitsraum 45 ausgebildet und der Gasraum 46 ist von dem Hydraulikarbeitsraum 45 mit einer Blase 44 oder einem Kolben 43 als bewegliches Trennelement 43, 44 getrennt, so dass der Hoch- und Niederdruckspeicher 27, 28, 29 als Blasenspeicher 51 oder als Kolbenspeicher 4 ausgebildet sind. An dem Hochund/oder Niederdruckspeicher 27, 28, 29 kann eine Undichtigkeit oder Leckage auftreten, so dass sich die Stoffmenge oder die Masse des Gases in je einem Hochund/oder Niederdruckspeicher 27, 28, 29 verkleinern kann und/oder es kann dass sich die Stoffmenge oder die Masse der Hydraulikflüssigkeit verkleinern. Verluste an Gas und/oder Hydraulikflüssigkeit oberhalb kritischer Mengen können die Funktionsfähigkeit des Antriebsstranges 1 einschränken.

Das aktuelle veränderliche spezifische Volumen $V_{g-HP}$ des Gases in dem Hochdruckspeicher 28 und das aktuelle veränderliche spezifische Volumen $V_{g-LP}$ des Gases in dem Niederdruckspeicher 29 können mit den nachfolgenden Gleichungen berechnet werden. Das aktuelle spezifische Volumen $V_{g-HP}$ des Gases in dem Hochdruckspeicher 28 und das aktuelle spezifische Volumen $V_{g-LP}$ des Gases in dem Niederdruckspeicher 29 kann durch entsprechende Berechnungen als Volumen pro Masseneinheit bzw. Volumen pro Stoffmengeneinheit angegeben werden.

$$v_{g-HP} = \frac{Z R_S T_{g-HP}}{P_{HP}}$$

$$v_{g-LP} = \frac{Z R_S T_{g-LP}}{P_{LP}}$$

Der Hochdruckspeicher 28 weist ein konstantes konstruktiv bedingtes Gesamtvolumen $V_{HP}$ aus dem aktuellen veränderlichen Volumen $V_{g-HP}$ Gases und dem aktuellen veränderlichen Volumen $V_{oil-HP}$ Hydraulikflüssigkeit auf und der Niederdruckspeicher 29 weist ein konstantes konstruktiv bedingtes Gesamtvolumen $V_{LP}$ aus dem aktuellen veränderlichen Volumen $V_{g-LP}$ des Gases und dem aktuellen veränderlichen Volumen $V_{oil-LP}$ Hydraulikflüssigkeit auf. Lediglich an Anteil an dem Volumen des Gases und der Hydraulikflüssigkeit können verändert werden. Hieraus ergibt sich die nachfolgende Gleichung:

$$V_{g-HP} + V_{g-LP} + V_{oil-HP} + V_{oil-LP} = V_{HP} + V_{LP}$$

Diese Gleichung kann in die nachfolgende Gleichung umgeformt werden:

$$V_{g-HP} + V_{g-LP} = V_{HP} + V_{LP} - (V_{oil-HP} + V_{oil-LP})$$

Hieraus kann die nachfolgende Gleichung abgeleitet werden:

$$n_{g-HP}\, v_{g-HP} + n_{g-LP}\, v_{g-LP} = V_{tank} + V_{oil}$$

Dabei ist $V_{tank} = V_{HP} + V_{LP}$ das konstruktiv bedingte und konstante Gesamtvolumen des Hoch- und Niederdruckspeichers 28, 29 und $V_{oil} = V_{oil-HP} + V_{oil-LP}$ ist das Volumen als Gesamtvolumen der Hydraulikflüssigkeit in dem Hoch- und Niederdruckspeicher 28, 29 und $n_{g-HP}$ ist die Stoffmenge bzw. die Masse des Gases in dem Hochdruckspeicher 28 und $n_{g-LP}$ ist die Stoffmenge bzw. die Masse des Gases in dem Niederdruckspeicher 29. In den Hoch- und Niederdruckspeicher 28, 29 ist die Gasart bekannt, so dass die Stoffmenge einfach in die Masse oder umgekehrt umgerechnet werden kann, weil die Masse das Produkt ist aus der Stoffmenge und der molaren Gasmasse bzw. Molmasse. Die Berechnung kann somit mit der Stoffmenge bzw. der Masse ausgeführt werden.

Mit Umformung der obigen Gleichung kann die nachfolgende Gleichung angegeben werden und in dieser Gleichung wird $V_{g-LP}$ als Funktion bzw. in Abhängigkeit von $V_{g-HP}$ angegeben.

$$v_{g-LP} = -\frac{n_{g-HP}}{n_{g-LP}} v_{g-HP} + \frac{V_{tank} - V_{oil}}{n_{g-LP}}$$

In der Mathematik weist die Gleichung einer Gerade die nachfolgende Form y = mx + d auf. Dabei gibt m die Steigung der Geraden an und d ist eine additive Konstante und y wird als Funktion bzw. in Abhängigkeit von x angegeben. In der obigen Gleichung ist somit

$$y = v_{g-LP}$$

$$x = v_{g-HP}$$

$$m = \frac{n_{g-HP}}{n_{g-LP}}$$

$$d = \frac{V_{tank} - V_{oil}}{n_{g-LP}}$$

Ein Verlust von Gas in dem Niederdruckspeicher 29 verändert den Wert von m und den Wert von d. Ein Verlust von Gas in dem Hochdruckspeicher 28 verändert den Wert von m, nicht jedoch den Wert von d. Ein Verlust von Hydraulikflüssigkeit verändert den Wert von d, jedoch nicht den Wert von m. Ein gleichzeitiger Verlust an Gas und Hydraulikflüssigkeit verändert den Wert von m und d.

Es ergibt sich somit die nachfolgende Gleichung:

$$v_{g\text{-}HP} = m\, v_{g\text{-}LP} + d$$

Das aktuelle Volumen $V_{g\text{-}HP}$ des Hochdruckspeichers 28 und das aktuelle Volumen $V_{g\text{-}LP}$ des Niederdruckspeichers 29 können aus der obigen Berechnung der Modell-Temperatur T bzw. $T_g$ und dem Mess-Druck P des Drucksensors 47 mit der Zustandsgleichung idealer oder realer Gase berechnet werden. Die Werte für m und d als Prüfparameter für die Leckage, insbesondere Leckagemenge, an Gas und/oder Hydraulikflüssigkeit können für jeden Iterationsschritt mit dem Rekursiven Verfahren der kleinsten Fehlerquadrate (Recursive Least Squares) berechnet werden. In der Recheneinheit 39 sind zulässige Prüfparameterbereiche für die Prüfparameter m und d gespeichert und bei einer Abweichung der Werte für m und d außerhalb der zulässigen Prüfparameterbereich liegt eine nicht mehr tolerierbare Leckage oder Undichtigkeit an dem Hoch- und/oder Niederdruckspeicher 28, 29 vor. Es kann anschließend wenigstens eine Schadensmaßnahme, beispielsweise eine Störungsmeldung ausgegeben werden und/oder der Betrieb mit dem hydraulischen Antriebsteilstrang 3 eingestellt werden und/oder der Betrieb mit dem hydraulischen Antriebsteilstrang 3 an die Verluste, insbesondere der Menge der Verluste, an Gas und/oder Hydraulikflüssigkeit angepasst werden, ausgeführt werden.

Bei einer Abweichung der Prüfparameter m und d außerhalb der zulässigen Prüfparameterbereiche kann in einem Diagnoseschritt auch die gesamte Hydraulikflüssigkeit in den Niederdruckspeicher 29 gepumpt werden, so dass in dem Hochdruckspeicher 28 das Volumen $V_{g\text{-}HP}$ des Gases dem Gesamtvolumen $V_{HP}$ des Hochdruckspeichers 28 entspricht. Aus dem Gesamtvolumen $V_{HP}$ des Hochdruckspeichers 28 und spezifischen Volumen $V_{g\text{-}HP}$ des Gases in dem Hochdruckspeicher 28 kann die Stoffmenge $n_{g\text{-}HP}$ bzw. die Masse des Gases in dem Hochdruckspeicher 28 berechnet werden. Die Stoffmenge $n_{g\text{-}LP}$ bzw. die Masse des Gases in dem Niederdruckspeicher 29 und das aktuellen Volumen $V_{oil\text{-}LP}$ Hydraulikflüssigkeit in den Niederdruckspeicher 29 können mit der obigen Gleichung berechnet werden.

**Patentansprüche**

1. Verfahren zur Steuerung und/oder Regelung eines Antriebsstranges (1) für ein Kraftfahrzeug mit den Schritten:

   - Einleiten einer Hydraulikflüssigkeit in wenigstens einen Druckspeicher (4, 27, 51), so dass ein Gasvolumen in dem Druckspeicher (4, 27, 51) reduziert wird und die Ist-Temperatur und der Ist-Druck des Gases erhöht wird und/oder
   - Ausleiten einer Hydraulikflüssigkeit aus dem wenigstens einen Druckspeicher (4, 27, 51), so dass ein Gasvolumen in dem Druckspeicher (4, 27, 51) erhöht wird und die Ist-Temperatur und der Ist-Druck des Gases reduziert wird,
   - Erfassen eines Mess-Druckes des Gases in dem wenigstens einen Druckspeicher (4, 27, 51) mit wenigstens einem Drucksensor (47) mit einer ersten zeitlichen Verzögerung zu einem in Abhängigkeit von der Zeit variablen Ist-Druck des Gases,
   - Erfassen einer Mess-Temperatur des Gases in dem wenigstens einen Druckspeicher (4, 27, 51) mit wenigstens einem Temperatursensor (48) mit einer zweiten zeitlichen Verzögerung zu einem in Abhängigkeit von der Zeit variablen Ist-Temperatur des Gases und die zweite zeitliche Verzögerung größer ist als die erste zeitliche Verzögerung, wobei
   - zu der von dem wenigstens einen Temperatursensor (48) erfassten Mess-Temperatur eine Modellberechnung ausgeführt wird und mit der Modellberechnung in Abhängigkeit von der Mess-Temperatur des Gases eine Modell-Temperatur bestimmt wird und die zeitliche Verzögerung zwischen der Modell-Temperatur und der Ist-Temperatur des Gases kleiner ist als die zeitliche Verzögerung zwischen der Mess-Temperatur und der Ist-Temperatur des Gases

   **dadurch gekennzeichnet, dass**
   wenigstens ein Prüfparameter für eine Leckage, insbesondere Leckagemenge, an Gas und/oder Hydraulikflüssigkeit in dem wenigstens einen Druckspeicher (4, 27, 51) berechnet wird und mit wenigstens einem zulässigen Prüfparameterbereich verglichen wird und bei einem Wert des wenigstens einen Prüfparameters außerhalb des wenigstens einen zulässigen Prüfparameterbereiches wenigstens eine Schadensmaßnahme eingeleitet wird.

2. Verfahren nach Anspruch 1,
   **dadurch gekennzeichnet, dass**
   der Antriebsstrang (1) einen Hochdruckspeicher (27, 28) und einen Niederdruckspeicher (27, 29) mit jeweils einem Hydraulikflüssigkeitsraum (45) und einem Gasraum (46) umfasst und vorzugsweise das aktuelle spezifische Volumen ($V_{g\text{-}HP}$) des Gases in dem Hochdruckspeicher (28) aus der Zustandsgleichung der idealen oder realen Gase mit der Modell-Temperatur und dem Mess-Druck des Gases in dem Hochdruckspeicher (27, 28) berechnet wird und vorzugsweise das aktuelle spezifische Volumen ($V_{g\text{-}LP}$) des Gases in dem Niederdruckspeicher (29) aus der Zustandsgleichung der idealen oder realen Gase mit der Modell-Temperatur und dem Mess-Druck des Gases in dem Niederdruckspeicher (27, 29) berechnet wird.

3. Verfahren nach Anspruch 1 oder 2,
**dadurch gekennzeichnet, dass**
für die Berechnung des wenigstens einen Prüfparameters davon ausgegangen wird, dass der Hochdruckspeicher (28) ein konstantes konstruktiv bedingtes Gesamtvolumen ($V_{HP}$) als der Summe aus dem aktuellen veränderlichen Volumen ($V_{g-HP}$) des Gases und dem aktuellen veränderlichen Volumen ($V_{oil-HP}$) der Hydraulikflüssigkeit aufweist und der Niederdruckspeicher (29) ein konstantes konstruktiv bedingtes Gesamtvolumen ($V_{LP}$) als der Summe aus dem aktuellen veränderlichen Volumen ($V_{g-LP}$) des Gases und dem aktuellen veränderlichen Volumen ($V_{oil-LP}$) der Hydraulikflüssigkeit aufweist.

4. Verfahren nach einem oder mehreren der vorhergehenden Ansprüche,
**dadurch gekennzeichnet, dass**
für die Berechnung des wenigstens einen Prüfparameters davon ausgegangen wird, dass das aktuelle veränderlichen Volumen ($V_{g-HP}$) des Gases in dem Hochdruckspeicher (28) das Produkt ist aus der Stoffmenge ($n_{g-HP}$) des Gases in dem Hochdruckspeicher (28) und dem aktuellen spezifische Volumen ($V_{g-HP}$) des Gases in dem Hochdruckspeicher (28) und das aktuelle veränderlichen Volumen ($V_{g-LP}$) des Gases in dem Niederdruckspeicher (29) das Produkt ist aus der Stoffmenge ($n_{g-LP}$) des Gases in dem Niederdruckspeicher (29) und dem aktuellen spezifische Volumen ($V_{g-LP}$) des Gases in dem Niederdruckspeicher (29).

5. Verfahren nach einem oder mehreren der vorhergehenden Ansprüche,
**dadurch gekennzeichnet, dass**
die Stoffmenge ($n_{g-HP}$) des Gases in dem Hochdruckspeicher (28) und die Stoffmenge ($n_{g-LP}$) des Gases in dem Niederdruckspeicher (29) berechnet wird und in Abhängigkeit von der Stoffmenge ($n_{g-HP}$) des Gases in dem Hochdruckspeicher (28) und der Stoffmenge ($n_{g-LP}$) des Gases in dem Niederdruckspeicher (29) ein erster Prüfparameter berechnet wird.

6. Verfahren nach Anspruch 5,
**dadurch gekennzeichnet, dass**
der erste Prüfparameter berechnet wird mit einer Division der Stoffmenge ($n_{g-LP}$) des Gases in dem Niederdruckspeicher (29) durch die Stoffmenge ($n_{g-HP}$) des Gases in dem Hochdruckspeicher (28).

7. Verfahren nach einem oder mehreren der vorhergehenden Ansprüche,

**dadurch gekennzeichnet, dass**
ein zweiter Prüfparameter berechnet wird in Abhängigkeit von dem konstruktiv bedingten Gesamtvolumen ($V_{tank}$) des Hoch- und Niederdruckspeichers (28, 29) und von dem Volumen ($V_{oil}$) der Hydraulikflüssigkeit in dem Hoch- und Niederdruckspeicher (28, 29) und von der Stoffmenge ($n_{g-HP}$) des Gases in dem Hochdruckspeicher (28).

8. Verfahren nach Anspruch 7,
**dadurch gekennzeichnet, dass**
der zweite Prüfparameter berechnet wird mit der Differenz aus dem Gesamtvolumen ($V_{tank}$) des Hoch- und Niederdruckspeichers (28, 29) und dem Volumen ($V_{oil}$) der Hydraulikflüssigkeit in dem Hoch- und Niederdruckspeicher (28, 29) und das Ergebnis dieser Differenz dividiert wird durch die Stoffmenge ($n_{g-HP}$) des Gases in dem Hochdruckspeicher (28).

9. Verfahren nach einem oder mehreren der vorhergehenden Ansprüche,
**dadurch gekennzeichnet, dass**
für die Berechnung des wenigstens einen Prüfparameters ein funktionaler Zusammenhang zwischen dem aktuellen spezifischen Volumen ($V_{g-LP}$) des Gases in dem Niederdruckspeicher (29) und dem aktuellen spezifischen Volumen ($V_{g-HP}$) des Gases in dem Hochdruckspeicher (28) berechnet wird.

10. Verfahren nach einem oder mehreren der vorhergehenden Ansprüche,
**dadurch gekennzeichnet, dass**
für die Berechnung des wenigstens einen Prüfparameters ein funktionaler direkt oder indirekt proportionaler Zusammenhang zwischen dem aktuellen spezifischen Volumen ($V_{g-LP}$) des Gases in dem Niederdruckspeicher (29) und dem aktuellen spezifische Volumen ($V_{g-HP}$) des Gases in dem Hochdruckspeicher (28) berechnet wird.

11. Verfahren nach Anspruch 10,
**dadurch gekennzeichnet, dass**
als Proportionalitätskonstante der zweite Prüfparameter verwendet wird und/oder als additive Konstante der erste Prüfparameter verwendet wird.

12. Verfahren nach einem oder mehreren der vorhergehenden Ansprüche,
**dadurch gekennzeichnet, dass**
die Berechnung des wenigstens einen Prüfparameters mit dem Verfahren nach dem kleinsten Fehlerquadrat ausgeführt wird.

13. Antriebsstrang (1) für ein Kraftfahrzeug, umfassend

     - wenigstens eine hydraulische Pumpe (19) und wenigstens einen hydraulischen Motor (20) zur Umwandlung von mechanischer Energie in hydraulische Energie und umgekehrt,
- wenigstens einen Druckspeicher (4, 27, 51),
**dadurch gekennzeichnet, dass**
ein Verfahren gemäß einem oder mehrere der vorhergehenden Ansprüche ausführbar ist.

**14.** Antriebsstrang nach Anspruch 13,
**dadurch gekennzeichnet, dass**
eine hydraulische Pumpe (19) und ein hydraulischer Motor (20) von einer Schrägscheibenmaschine (15,18) gebildet ist, insbesondere der Antriebsstrang (1) zwei Schrägscheibenmaschinen (15, 18) umfasst, welche hydraulisch miteinander verbunden sind und als hydraulisches Getriebe (22) fungieren, und/oder
der Antriebsstrang (1) zwei Druckspeicher (4, 27, 51) als Hochdruckspeicher (28) und Niederdruckspeicher (29) umfasst und/oder
der wenigstens eine Druckspeicher (4, 27, 51) als ein Kolbenspeicher (4) und/oder ein Blasenspeicher (51) ausgebildet ist.

**15.** Antriebsstrang nach Anspruch 13 oder 14,
**dadurch gekennzeichnet, dass**
der wenigstens eine Druckspeicher (4, 27, 51) je einen Temperatursensor (48) zur Erfassung der Mess-Temperatur des Gases und je einen Drucksensor (47) zur Erfassung eines Mess-Druckes des Gases umfasst und/oder
der Antriebsstrang (1) eine Recheneinheit (39) mit einem Rechner (40) und einem Datenspeicher (41) umfasst

Fig. 1

EP 3 021 012 A1

Fig. 2

Fig. 3

Europäisches
Patentamt

European
Patent Office

Office européen
des brevets

# EUROPÄISCHER RECHERCHENBERICHT

**Nummer der Anmeldung**

EP 15 19 0951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 001357 A1 (BOSCH GMBH ROBERT [DE]) 9. September 2010 (2010-09-09) * das ganze Dokument * ----- | 1-15 | INV. F16H61/4096 B60K6/12 F15B19/00 |
| X | US 2010/313849 A1 (STONER MICHAEL ANTHONY [US] ET AL) 16. Dezember 2010 (2010-12-16) * das ganze Dokument * ----- | 1-15 | |
| A | DE 36 09 701 A1 (SIEMENS AG [DE]) 24. September 1987 (1987-09-24) * das ganze Dokument * ----- | 1-12 | |
| A,D,P | DE 10 2013 215862 A1 (BOSCH GMBH ROBERT [DE]) 12. Februar 2015 (2015-02-12) * das ganze Dokument * ----- | 1-15 | |
| A | DE 10 2012 222717 A1 (BOSCH GMBH ROBERT [DE]) 12. Juni 2014 (2014-06-12) * das ganze Dokument * ----- | 1,13,14 | |

**RECHERCHIERTE SACHGEBIETE (IPC)**

F16H
B60K
F15B

Der vorliegende Recherchenbericht wurde für alle Patentansprüche erstellt

| Recherchenort | Abschlußdatum der Recherche | Prüfer |
|---|---|---|
| München | 6. April 2016 | Meritano, Luciano |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.**

EP 15 19 0951

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2016

| Im Recherchenbericht angeführtes Patentdokument | Datum der Veröffentlichung | Mitglied(er) der Patentfamilie | Datum der Veröffentlichung |
|---|---|---|---|
| DE 102009001357 A1 | 09-09-2010 | CN 102341257 A<br>DE 102009001357 A1<br>EP 2403730 A1<br>US 2012055144 A1<br>WO 2010099996 A1 | 01-02-2012<br>09-09-2010<br>11-01-2012<br>08-03-2012<br>10-09-2010 |
| US 2010313849 A1 | 16-12-2010 | BR PI1009667 A2<br>CA 2765159 A1<br>CN 102725619 A<br>CN 104972884 A<br>EP 2440902 A2<br>JP 5682016 B2<br>JP 5841192 B2<br>JP 2012530247 A<br>JP 2014197007 A<br>JP 2015187500 A<br>JP 2015199494 A<br>KR 20120052926 A<br>US 2010313849 A1<br>US 2013317716 A1<br>US 2015152861 A1<br>WO 2010144793 A2 | 15-03-2016<br>16-12-2010<br>10-10-2012<br>14-10-2015<br>18-04-2012<br>11-03-2015<br>13-01-2016<br>29-11-2012<br>16-10-2014<br>29-10-2015<br>12-11-2015<br>24-05-2012<br>16-12-2010<br>28-11-2013<br>04-06-2015<br>16-12-2010 |
| DE 3609701 A1 | 24-09-1987 | DE 3609701 A1<br>US 4781061 A | 24-09-1987<br>01-11-1988 |
| DE 102013215862 A1 | 12-02-2015 | KEINE | |
| DE 102012222717 A1 | 12-06-2014 | DE 102012222717 A1<br>WO 2014090541 A1 | 12-06-2014<br>19-06-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 2733870 C2
- DE 19542427 A1
- DE 102013215862 A1